# EUROPEAN PATENT APPLICATION

(11) **EP 1 767 779 A1**
(43) Date of publication of application: **28.03.2007**
(21) Application number: 05020991.5
(22) Date of filing: 27.09.2005
(51) Int. Cl.: F03B 17/04, H02K 53/00

(54) **Differential displacement generator**

(71) Applicant: Roselli, Auro, Encinitas CA 92024-1538 (US)
(72) Inventor: Roselli, Auro, Encinitas CA 92024-1538 (US)
(74) Representative: Roos, Peter

(57) **Abstract**

Differential Displacement Generator. A generator consisting of a concatenation (Fig. 6) or a Ferris wheel (Fig. 7f) of submerged air chambers (Fig. 1) whose displacement is changed by heavy free pistons (Fig. 1b) that partially enter and partially exit the chamber by gravity when rotated, creating a continuing unbalance from one side to the other that turns a drum over which they are draped, or turns the Ferris wheel, giving them the kineticc energy to generate electricity when geared to a dynamo or dynamos.

## Description

### Historical background of the invention

1) Although at first sight the invention may seem to be just another perpetual motion scheme, in reality it has nothing to do with perpetual motion. This is not plan to create energy from nothing but a plan to convert a force into an energy. In this case it is the conversion of the force of universal gravitation into kinetic and electric energy.
2) Converting a force into energy is what the Sun and other stars are reputed to do. In this case it is the strong nuclear force that is converted into heat, light, radiation, radio waves, solar wind and perhaps other still undetected forms of energy
3) On a human scale another force: universal gravitation was harnessed by the first Acadian colonists around the Bay of Fundy, to obtain kinetic energy in the Seventeenth Century. They built water wheels that turned one way when the tides ( the highest in the world) rushed in and turned the other way when the tides ebbed. Either way the water wheels were geared to millstones which ground wheat, corn and other grains. The primal source of that energy was the Moon which with its gravity causes tides.
4) More recently gravity was cited by inventor Solomon Andrews in U.S. Patent No. 43,449. ( 1864) as the source of the energy that powered his dirigible lighter-than-air crafts on two flights from Perth Amboy, New Jersey, to Queens, New York, and to Eastern Long Island, on May 25 and June 5, 1866. Gravity pulled down air in prevalence to his lighter-than-air craft which was made dirigible and capable of flying against moderate winds by elongated features that made it rise and descend obliquely as controlled by the shifting of weights in a gondola in which he, with associates Waldo Hill, C. M. Plumb and George Trow, rode.
5) The force of universal gravitation is also what powers a 20 Megawatt power station in Annapolis Royal, Nova Scotia, Canada. Here again, it is the tides of the Bay of Fundy that supply the hydro power. Another tidal power station was started in France in the year 1968.
6) Universal gravitation is also the primal source of energy in U.S. Patent No. 4,261,534 (Roselli,1981) and U.S. Patent No. 4,860,970 ( Roselli, 1986 ) in which it provides the forward propulsion not only in the case of the lighter-than-air aircraft, in the U.S. patent 4,261,534 , as in the above mentioned U.S. Patent 43,449, but also in the less obvious case of the heavier-than-air aircraft as in U.S. Patent 4,860.970.

### Principle of the invention

7) From the times of Archimedes it has been known that if a body weighs ten tons and displaces only nine tons of water this body sinks. If a body weighs ten ton and displaces eleven tons of water this body floats. If the same body can change displacement, increasing it from a point when it displaces less that its weight in water to a point when it displaces more than its weight in water this body will alternatively sink and float. In the case of this invention, although the weight of the units changes only imperceptibly in the air, in water a sufficient increase of displacement can bring a clearly noticeable and usable change in buoyancy by changing its specific gravity.
8) A short consideration of the characteristic of gravity makes us realize that weight on Earth is just the relationship of a body to the fluid in which it is immersed. In other words, the weight of a body depends on its specific gravity compared to the specific gravity of the fluid surrounding it. For example the same chunk of wood that falls to the ground if let go in the air rises to the surface if let go underwater because the specific gravity of the wood is greater than that of the air but less that the specific gravity of water. Two objects of the same weight, such as a tennis ball and a much smaller lead ball show that the tennis ball floats and the lead ball sinks because of their different specific gravity compared to the specific gravity of water
9) Even the floatation of the human body changes relative to the way he or she inhales or exhales. Of course the weight of his or her body does not change but the displacement does with the expansion of the chest; and the legs that tend to sink when the chest is deflated, tend to raise when the chest is inflated.
10) In the case of this invention the expansion of the body is caused by the gravity that pulls down a free piston inside an air chamber. However when this combination of air chamber and piston ( henceforth a unit ) is rotated upside down, gravity pulls down the piston therefore increasing its displacement and reducing its specific gravity.
11) In a submerged concatenation of such units draped on top of a submerged drum capable of rotating, or affixed to a submerged Ferris wheel, the side with the pistons mostly inside the air chambers will weigh more than the side where the pistons are mostly outside the air chambers thereby creating a continuous imbalance that turns the drum or the Ferris wheel. This constitutes a motor and its kinetics can be exploited by gearing up the submerged drum or the submerged Ferris wheel to a dynamo or to dynamos
12) The kinetic energy thus obtained can be maximized by making the air chambers as big and light as technically and economically feasible and making the pistons as big and heavy as technically and economically feasible, The active movers being the heavy pistons, all the other components of the machineries involved are only passive elements
13) When the strong kinetic energy thus obtained is geared up with systems known to fast rotating dynamos, the electricity thus obtained can be utilized also by splitting some of the surrounding water into hydrogen and oxygen and then pumping these gases by pipelines to points of utilization, the hydrogen as a non polluting fuel for homes, industries, offices, places of business and for transportation in vehicles, vessels and aircrafts, the oxygen for medical and industrial uses.

### Explanation of the illustrations

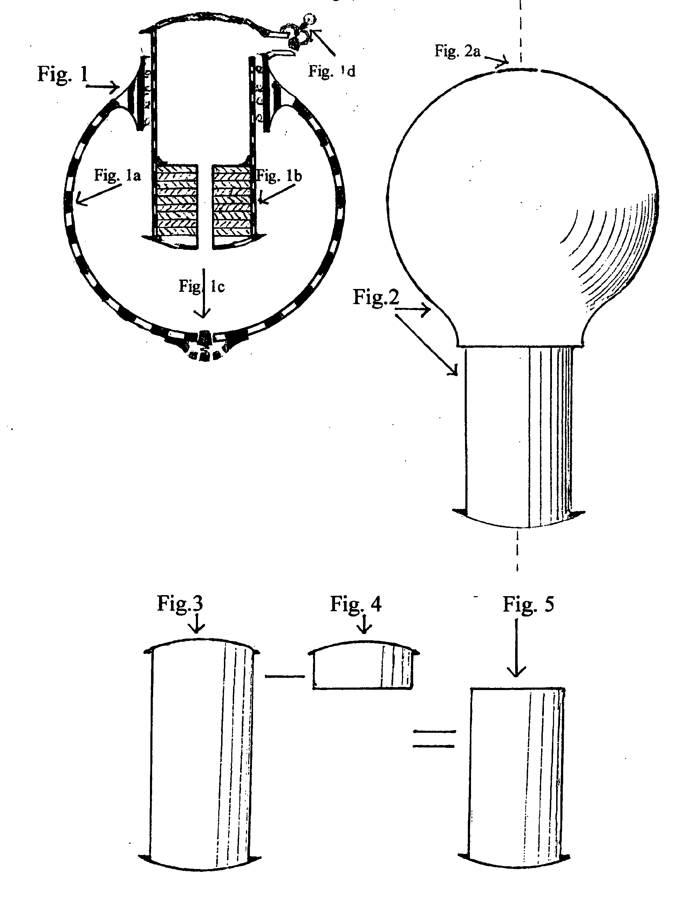

Fig. 1 is a midsectional side elevation of the unit(s) taken at the point indicated in **Fig. 2a** to show the basic principle of the differential displacement generator. The air chamber as in **Fig.1a** is spherical to maximize volume per surface and strength per weight. The piston in **Fig.1b** is cylindrical to optimize air and water tightness with the help of retaining rings. **Fig.1c** is a pressure valve in a sieve to control seepage.
   The reinforcements at the collar of the sphere and the retaining rings are drawn for clarity and are not necessarily to scale. The unit in **Fig.1** is in the upright position and the heavy free piston is plunged by gravity inside the air chamber. The unit displaces a lesser weight of water and therefore it sinks.
Fig. 2 is a perspective drawing that shows the unit consisting of a spherical air chamber and a cylindrical piston in the rotated, upside down position. **Fig. 2a** is the point at midsection where **Fig.1** is taken. In Fig. 2 the heavy piston is partially extracted by gravity; the same unit displaces more weight of water, it has a lesser specific gravity and it floats.

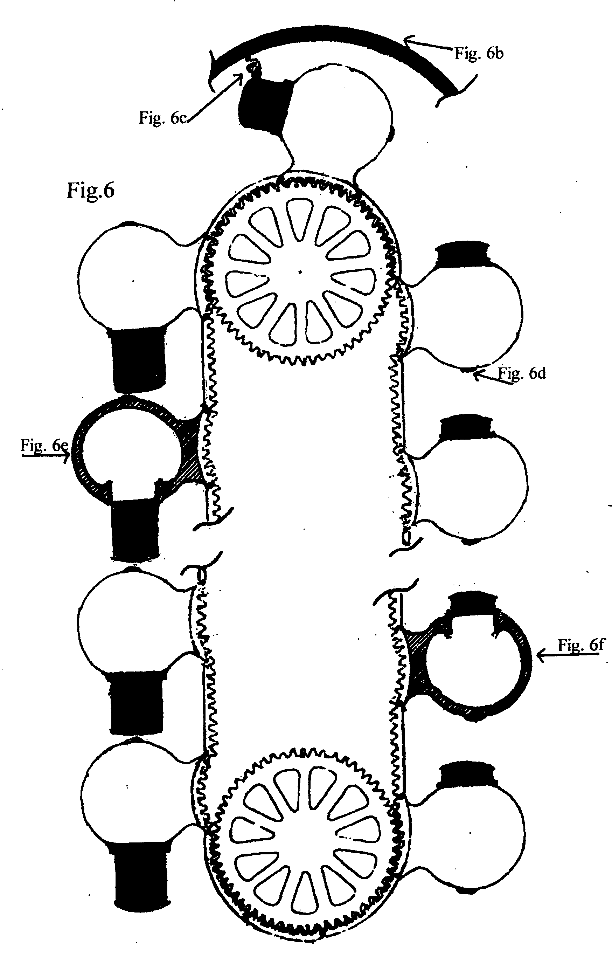

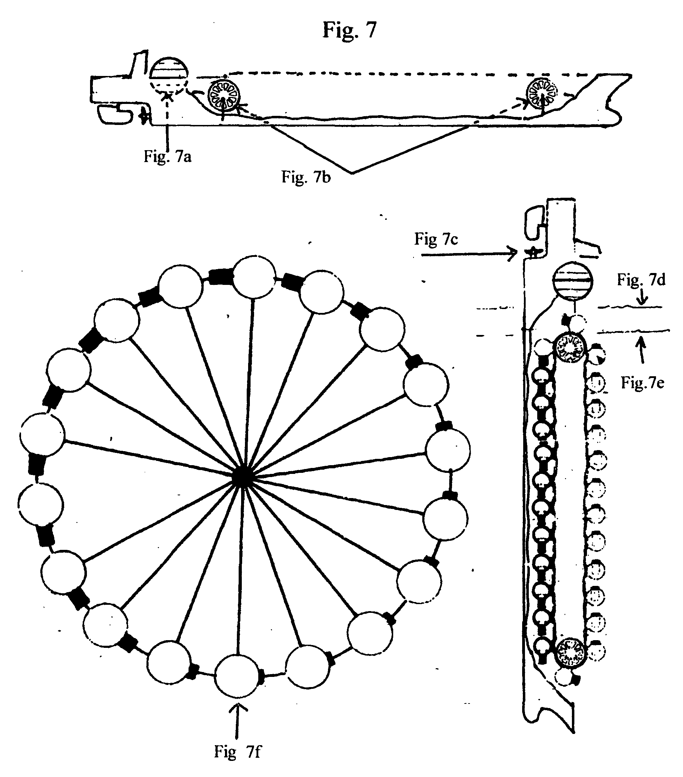

Fig. 3 is a perspective drawing of the cylindrical piston.
Fig. 4 is the part of the cylindrical piston that remains out when the rest of the piston plunges inside the spherical air chamber.
Fig. 5 is the difference in the exposed parts of the cylinder when it is mostly outside the sphere minus the exposed part when the cylinder is mostly inside the sphere. This differential in specific gravity is the force that drives the machinery.
Fig. 6 shows a part of the concatenation that can be draped and geared over a drum that is free to rotate around its longitudinal axis so that the imbalance from its down side compared to its up side causes it to turn. All elements in this illustration: air chambers, pistons, drums, gears, connecting belt, are drawn for clarity and not necessarily to scale. Also in this illustration the rotation of the drum happens to be clockwise, but the same would apply if the up and down sides of the concatenation were inverted and if the rotation were imparted counterclockwise.
   Any continuing imbalance will cause the drum to turn but the torque at the axis of the drum will increase with the number of units going up and down over it. For efficiency's sake, it is also best if the down force from the down side of the rotation is equal or almost equal to the up force from the up side. This also reduces the weight and the strain over the axis of the drum. **Fig. 6b** is an out of center curved roof that causes the opening of valve in **Fig. 6c**, which is geared to a coiled spring, in order to replenish the air expelled together with seepage water from pressure valve in **Fig. 6d** which is activated by the pressure of the plunging piston in the first part of the descent and closed by water pressure in deeper water. **Fig. 6e** and **Fig. 6f** show the units with the geared cradles which, together with their geared belt connections, engage the gears of the drum and make it turn. For clarity, brevity and simplicity's sake the cradles are shown only in **Fig. 6e** and **Fig. 6f** but every unit of chamber and piston has its own cradle
Fig.7 shows a preferential embodiment and a way of constructing and operating a differential displacement generator. A ship, preferably a decommissioned tanker, has a circular section, **Fig 7a,** containing the crew's quarters and the maintenance and repair shops, that can be rotated 90 degrees, and she is fitted with two fixed drums capable of rotating **Fig. 7b.**
   When made to sink partially from the bow only, the rotated crew quarters, their workplaces and the areas for repair and maintenance remain above water. The ship comes to a vertical position in the water as in **Fig. 7c** and is made to sink down to the necessary level for submerging the working machinery, in **Fig. 7d,** and partially raised to the level in **Fig. 7e** for maintenance and repairs when needed.
   The system of flipping a ship to a vertical position in the water is already known as, for instance in the FLIP (Floating Instrument Platform ) of the Scripps Institution of Oceanography of La Jolla, California. The crew quarter rotates ninety degrees in order to keep all the horizontal surfaces, floor, ceilings, tables. shelves, etc. horizontal when the ship becomes vertical in the water.
   The assembly of the concatenation is best achieved when the ship is partially sunk and vertical in the water. Each unit can be fitted with an accretion of heavy disks, preferably lead, stacked one on top of another. Their optimum position of the weights is the one shown in **Fig.1b** so that, when the unit rotates on top of the drum most of the weight of the piston goes to the reinforced part of the spherical air chamber.
   The optimum weight of the pistons in relation to the spherical air chamber is achieved when the units sink when upright and float when upside down and with equal or almost equal down and up forces.
   In the case of a large ship such as a big converted tanker, more than one concatenation of units can be fitted and worked side by side in the vertical hull. In this case only the concatenation that needs maintenance and repairs is raised to the necessary level, taking into account that the weight of the concatenation is more manageable when submerged. In the case of smaller ships, the full ship can be raised to the maintenance and repairs level and the power station can consist of two ships with one working when the other one is stopped for works of maintenance and repairs.
**Fig 7f** shows the units rigidly affixed to a submerged Ferris wheel instead of draped over a rotating drum. The units are inactive when in a horizontal position but become more and more active as they approach the vertical positions both in the descending and the ascending semicircle . The advantage of this configuration is the great torque imposed to the axis of the Ferris wheel by the moment created by the two stretched out forces down and up on the two sides. The disadvantage is the limited number of units that exert the maximum forces, up and down, when vertical or almost vertical.

## Claims

1. A machinery to convert the force of gravitation into energy by means of units consisting of submerged air chambers and free pistons inside them that partially enter the chambers by gravity and partially exit the chambers by gravity when rotated upside down.

2. A machinery to convert the force of gravitation to kinetic and electric energy by means of a submerged concatenation, or a submerged Ferris wheel, where connected units consisting of an air chamber and a free piston change displacement when the heavy piston is alternatively plunged partially into the air chamber when the units are upright and partially extracted by gravity when the units are upside down, and when such connected units are draped and geared over a drum or affixed to a Ferris wheel that is thus made to turn either clockwise or counterclockwise as the case may be.

3. The production of cheap hydrogen and oxygen by electrolysis through such machinery and the electrical energy that it generates when geared up to dynamos.

4. The production of kinetic energy, by the above described means, to be used directly for works of grinding, mixing, pounding, breaking, and operating machinery bypassing the creation of electricity, and the use of electric motors, with the resultant savings in passive frictions and drags.

5. The production of kinetic and electric energy by the above described machineries mounted in ways known such as the floating, semisubmersible or fixed platforms mostly used today for offshore drilling and exploitation of hydrocarbon fields.

6. A preferred configuration of such machinery consisting of converted ships sunk in water from the prow in order to become vertical with only part of the stem emerging.

7. A preferred assembly of such units by accretion of heavy weights in the pistons of the units in the concatenation already draped and geared over a drum in a ship that is already rotated vertically and sunk, leaving only the crew quarters and the maintenance and repair shops emerging.

8. The production of kinetic and electric energy by means of units as described above immersed in fluids other than water such as hydrocarbons, when temperatures could freeze water, or mercury as in the case of smaller generators suitable for lesser tasks.

9. The production of kinetic and electric energy by the above described machineries immersed in oceans, seas, harbors, lakes, artificial lakes, rivers or cisterns.
